# EUROPEAN PATENT SPECIFICATION

(11) **EP 1 022 902 B1**
(45) Date of publication and mention of the grant of the patent: **22.03.2006**
(21) Application number: 99300440.7
(22) Date of filing: 21.01.1999
(51) Int. Cl.: H04N 7/173

(54) **Method and system for prioritising data operations**
Verfahren und Vorrichtung zur Prioritätsverwaltung für Datenverarbeitung
Méthode et système de gestion de priorité pour des opérations sur des données

(43) Date of publication of application: 26.07.2000
(73) Proprietor: Sony Service Centre (Europe) N.V., 1840 Londerzeel (BE)
(72) Inventor: Messer, Alan, Sony Service Center (Europe) N.V., 1130 Bruxelles (BE); Cuypers, Ludo, Sony Service Center (Europe) N.V., 1130 Bruxelles (BE); Aerts, Ives, Sony Service Center (Europe) N.V., 1130 Bruxelles (BE); Wybouw, Erik, Sony Service Center (Europe) N.V., 1130 Bruxelles (BE); Rademakers, Philip, Sony Service Ctr. (Europe) NV, 1130 Bruxelles (BE); Vanbecelaere, Kristof, Sony Serv. Ctr. (Europe) NV, 1130 Bruxelles (BE); Sato, Kenichi, Sony Service Center (Europe) N.V., 1130 Bruxelles (BE)
(74) Representative: Ayers, Martyn Lewis Stanley

(56) References cited:
- WO-A-98/12646
- US-A- 5 532 937
- US-A- 5 631 694
- US-A- 5 845 279
- RAMAKRISHNAN K K ET AL: "OPERATING SYSTEM SUPPORT FOR A VIDEO-ON-DEMAND FILE SERVICE" NETWORK AND OPERATING SYSTEM SUPPORT FOR DIGITAL AUDIO AND VIDEO, LANCASTER, NOV. 3 - 5, 1993, no. WORKSHOP 4, 3 November 1993, pages 216-227, XP000725320 SHEPHERD D ET AL (ED )

## Description

The present invention relates to a method and system for prioritising data operations, in particular with regard to prioritising allocation of data processing resources to a selection of tasks and for prioritising band width for the transmission of data. The present invention has particular application to an information server for providing information in an output transport stream, for instance as part of a digital video broadcast.

Previously, in order to prioritise processing resources or transmission bandwidth, tasks or data files have been set with a value indicating their relative importance. For instance, in the transmission of data, one data source may be allocated 80% of the available bandwidth, whilst another data source is allocated the remaining 20%. Similarly, where a processor has to carry out a number of different tasks, particular tasks may be allocated particular percentages of the available processing time.

Although this system works adequately for systems where the tasks or data sources do not change often, for systems which are reconfigured regularly, this method is computationally inefficient. In particular, where data sources or tasks are added or deleted, the system must recompute the percentage allocation for bandwidth or processing time.

US 5,845,279 concerns continuous-media-on-demand services and proposes various systems and methods of scheduling media segments of varying display rate, length and/or periodicity on at least one clustered, vertically-striped or horizontally-striped continuous media database volume. With respect to the at least one horizontally-striped database volume, one method includes the steps of: associating a display value with each of the media segments, sorting the media segments in a non-increasing order of value density to obtain an ordered list thereof and building a scheduling tree of the media segments, the scheduling tree having a structure that increases a total display value of the media segments.

The present application recognises for the first time the need to assign priorities to data operations in such a way that the relative priorities of those data operations remain and do not need recalculating even if data operations are added or deleted.

According to the present invention, there is provided a method of prioritising data operations such as processing or transmission, the method comprising:
constructing a cyclic array of a predetermined number of notional time slots (t);
assigning a priority to each data operation in terms of a frequency value, the frequency value being defined as the frequency of occurrence of the respective data operation relative to the notional time slots (t);
registering each data operation in the array at a series of consecutive notional time slots (t) with a spacing determined according to the frequency value; and
consecutively referring to each of the notional time slots (t) of the array in which one or more data operations are registered and carrying out a data operation whenever the data operation is registered and hence selected for the current notional time.

According to the present invention there is also provided a system for prioritising data operations, such as processing or transmission, the system comprising:
a cyclic array of a predetermined number of notional time slots (t);
an input for assigning a priority to each data operation in terms of a frequency value, the frequency value being defined as the frequency of occurrence of the respective data operation relative to the notional time slots;
a control for registering each data operation in the array at a series of consecutive notional time slots (t) with a spacing determined according to the frequency value, for consecutively referring to each of the notional time slots (t) of the array in which one or more data operations are registered and for initiating a data operation whenever the data operation is registered and hence selected according to advancement in notional time.

In this way, the priorities of the data operations are all set relative to the notional time slots of the array. If an entry for one data operation occurs every nth entry and an entry for another data operation occurs every mth operation, then the relative occurrence of the two entries will remain the same irrespective of whether an entry is made for another data operation, even though, clearly, the actual allocation for the first two data operations will be reduced. Thus, the method and system allow relative prioritisation of various data operations, without requiring the need of computation to recalculate their overall share when other data operations are added or deleted.

Preferably, the system may include a Stream Generator for assembling transport stream payloads from a selection of data sources, a frequency value being assigned to each of the data sources and the Stream Generator selecting a data source from which to take data for a transport stream payload according to the control.

By prioritising data sources for transmission in a transport stream, it is possible to allocate certain data sources with more bandwidth on the transport stream. Where data from the data sources is transmitted repetitively, this can be used to control the relative frequency with which the data from a particular data source is transmitted.

By virtue of the present invention, different data sources with different priorities may easily be selected or deleted without altering the relative transmission bandwidth already allocated to the data sources in use.

Preferably, an information server for providing information in an output transport stream may include such a system and carry out such a method. The information server is preferably for producing an output stream which is DVB compatible.

Although the proportioning of processing time or transmission bandwidth may be significant when carrying out data operations, some data operations are more time-dependent in the sense of requiring immediate action. For instance, for a processor handling video display and word processing operations, it may be far more important for the video processing operations to be conducted before the word processing operations. Similarly, for an information server which has allocated only a small proportion of bandwidth for the transmission of news items, it may be very important for a particular news bulletin to be allocated bandwidth immediately, rather than wait for its scheduled allocation of bandwidth.

The need for prioritising data operations in this way has been recognised for the first time by the present application.

There is proposed a method and system for prioritising data operations, such as processing or transmission in which each data operation is assigned with a latency value indicative of relative urgency for that data operation and in which selection of the next data operation to be carried out is decided on the basis of at least the latency values.

In this way, a processor or transmitter may determine which is the most important data operation for carrying out next.

The present invention will be more clearly understood from the following description, given by way of example only, with reference to the accompanying drawings, in which:
Figure 1 illustrates a broadcasting network in which the present invention may be embodied:
Figure 2 illustrates the play-out section of an Information Server in which the present invention may be embodied;
Figure 3 illustrates an arrangement of Information Servers in which the present invention may be embodied;
Figures 4 A and B illustrate an Information Server in which the present invention may be embodied;
Figure 5 illustrates an object/data carousel;
Figure 6 illustrates an array of notional time slots for prioritising data operations;
Figure 7 illustrates the construction of DVB sections from files; and
Figure 8 illustrates a dependency structure for data transformations.

The following description relates to an Information Server to which the present invention may be applied. In particular, an architecture is proposed for a DVB compliant data server, called Information Server, that is capable of generating DVB compliant transport streams containing DSMCC Data and Object Carousels. In addition, the Information Server is to support the dynamic updating of content inside a DSMCC Data and Object Carousel while it is being streamed out.

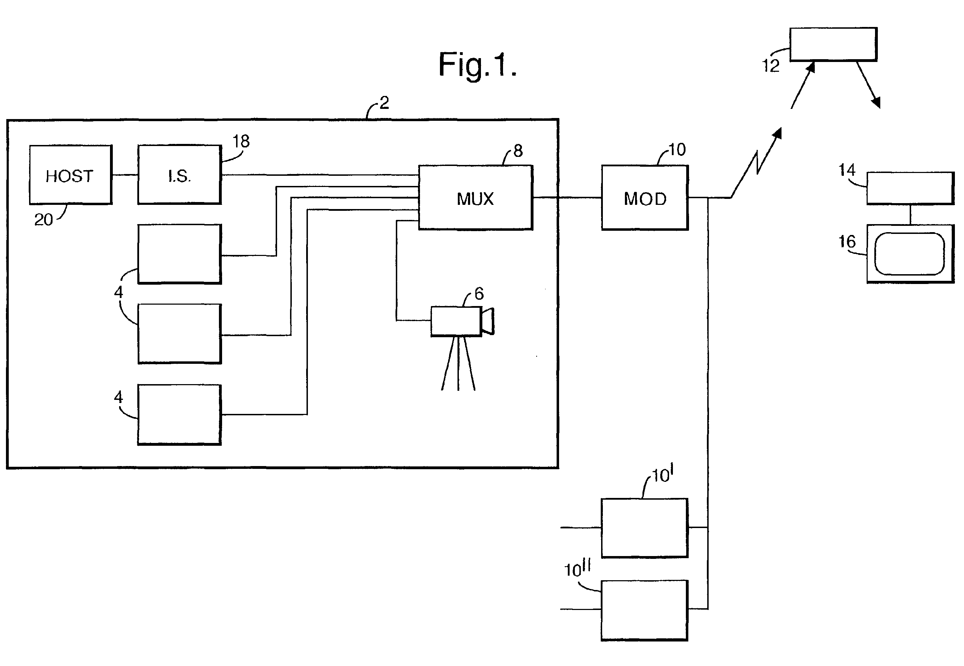

Figure 1 illustrates part of a DVB system in which the Information Server is incorporated. However, it should be appreciated that the Information Server can also be incorporated in other DVB networks, for instance cable or terrestrial, and can also be incorporated in other non-DVB networks.

A play-out section 2 may incorporated a number of video/audio sources 4, as well as live sources 6. Data from these sources, for instance in the form of MPEG2 transport stream packets, is fed to a multiplexer 8 and output from the play-out section 2. The multiplexed stream of data is fed to a modulator 10 for transmission, in this example, from a satellite 12. The signal is then received by the set-up box 14 of a television 16. Signals from a number of other modulators 10', 10" etc. may be fed together and transmitted to the satellite 12.

In this system, it is also possible to provide an Information Server 18. Just like the video/audio sources 4, 6, the Information Server 18 provides data, for instance in the form of MPEG2 transport stream packets to the multiplexer 8 for insertion into the data stream for transmission. The Information Server may be used to broadcast any form of data, but, in particular, MHEG 5 applications, HTML pages, Java applications, IRD software upgrades and other data services in the form of DSMCC objects on data carousels. As illustrated, the Information Server 18 is provided with a host 20 which is used to control the behaviour of the Information Server 18, together with the content and nature of the data output from the Information Server 18.

The Information Server is controlled by the host computer using some control network such as TCP/IP over ethernet. The generated transport streams are played out over some streaming network such as ethernet, DVB ASI, DVB LVDS or ATM to the receivers (PCs, STBs etc.).

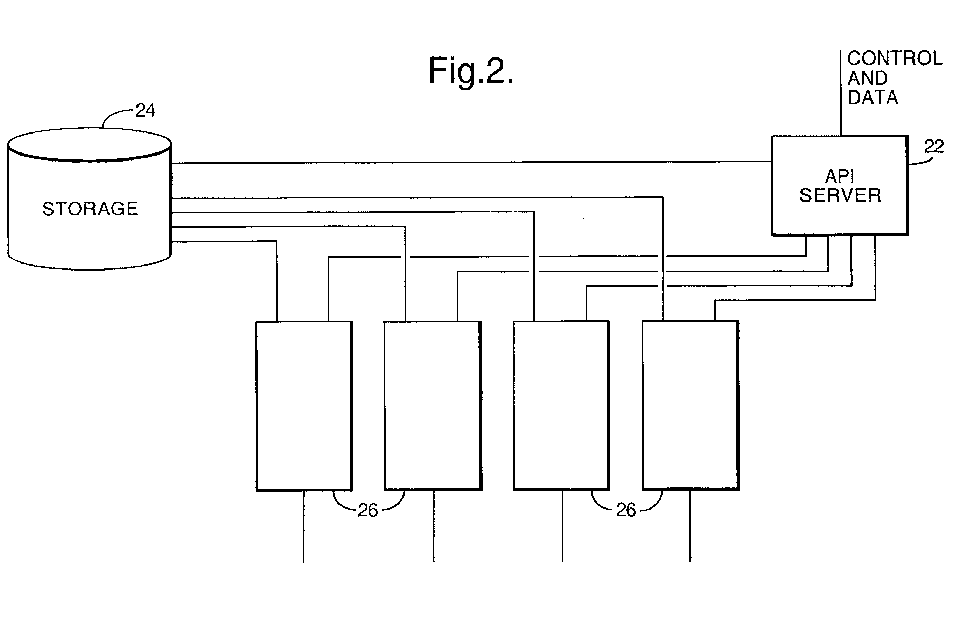

Figure 2 illustrates the overall architecture of the Information Server.

An API server 22 receives control and data from an external host. Data is transferred to a storage unit 24 for subsequent retrieval. At least one Stream Generator 26 is provided for outputting an MPEG2 data stream. Thus, in operation, the API server receives data, for instance a series of images, and transfers the data of these images to the storage 24. Each of the Stream Generators 26 generates a stream of data under the control of the API server 22 based on a description of the carousel. In particular, the API server 22 receives control from the external host and, in turn, controls the Stream Generators 26 appropriately. As will be described later, the Stream Generators 26 may comprise carousel builders so as to transmit data from the storage 24 in the correct sequence.

The purpose of the API server is to provide a software interface that is remotely accessible to a host computer (e.g. a PC) over TCP/IP. The software interface is realised by using an RPC protocol and provides the user of the Information Server with a set of software abstractions that allow the user to define object and data carousels in a way that is independent of the transport bit stream but that rather focus on the conceptual structure of the carousels starting from the content that must be broadcast by the carousels.

In addition, the API server manages the content data which is present on the content disk of the Information Server.

From an architectural point of view, the API server is realised as a single threaded process containing two major modules: "RPC layer" and "API Implementation". The "RPC layer" manages the control network connection with one or multiple host computers. Each connection is called a session. It receives the RPC requests from the host computer session, serialises the requests, checks whether they are valid, demarshalls the data (arguments) for the requests, invokes an appropriate entry point in the "API Implementation", receives the result (or error) from the API Implementation, marshalls the received results into an RPC reply and finally sends the reply back to the host computer. The API Implementation provides a set of functions that implement the functionality of the Information Server API. It interacts with the content disk, reads/writes data to this disk and checks the validity of the arguments in each API call.

Transmission of the streams from the Stream Generators 26 to the multiplexer of the play out section 2 may take a number of different forms. It is proposed that the streaming be provided as a separate unit to the Information Server. Thus, streaming may be chosen from, for instance, DVB-ASI via a PRISM board (as produced by Sony Digital Network Solutions Japan), DVB-LVDS, ATM or Ethernet.

It is proposed that the Information Server be provided as a standard 4U 19 inch rack-mount. The control network between the host computer and the Information Server might be, for instance, Ethernet or ATM.

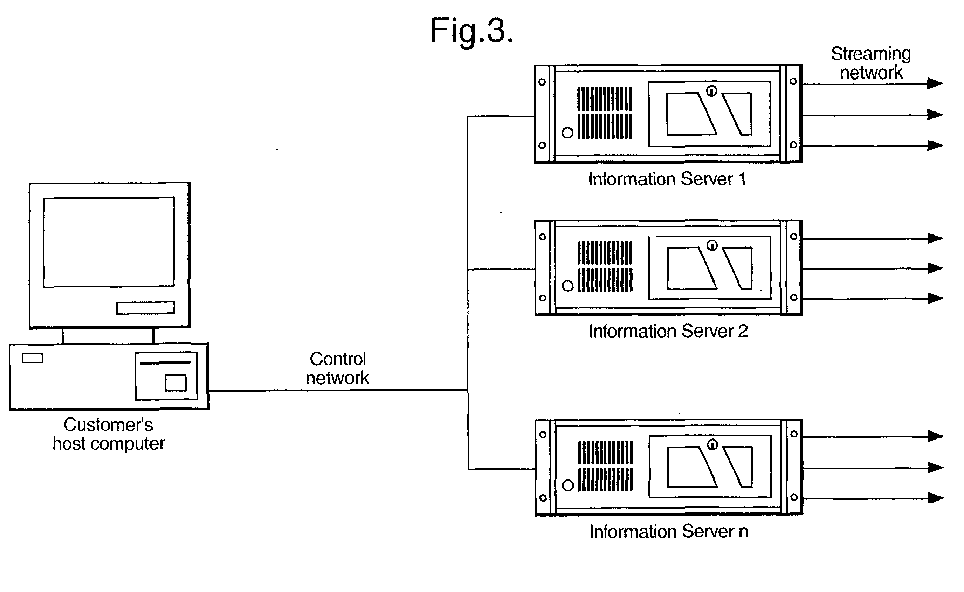

Figure 3 illustrates how one host computer may be used to control any number of Information Servers, each producing a number of streams.

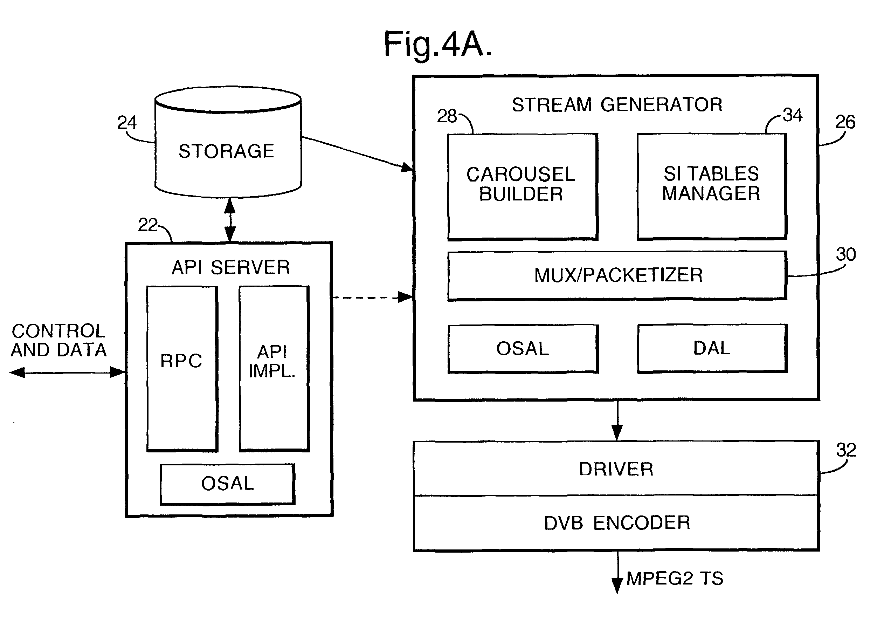

Figure 4A illustrates further details of the Information Server with reference to only one Stream Generator. The API server 22 includes the RPC (Remote Procedure Call) protocol allowing the APIs to be accessed by the host computer. It is also possible that the control APIs may run with IIOP as this becomes more popular. Thus, the API server 22 receives data and control from the remote host computer. The API server 22 also runs under an operating system abstraction layer or OSAL. This is provided to allow the Information Server to be run on a number of different operating systems. In particular, in order to adapt the Information Server to run on a different operating system, it is only necessary to change the OSAL.

The Stream Generator 26 is capable of outputting raw transport stream data. In particular, under the command of the API server 22, the Stream Generator 26 merely retrieves data from the storage 24 and outputs it without any knowledge of its content. However, it is also intended that the Stream Generator 26 be capable of constructing carousels, for instance DSMCC object carousels and DSMCC data carousels. Hence, the Stream Generator 26 includes at least one carousel builder 28.

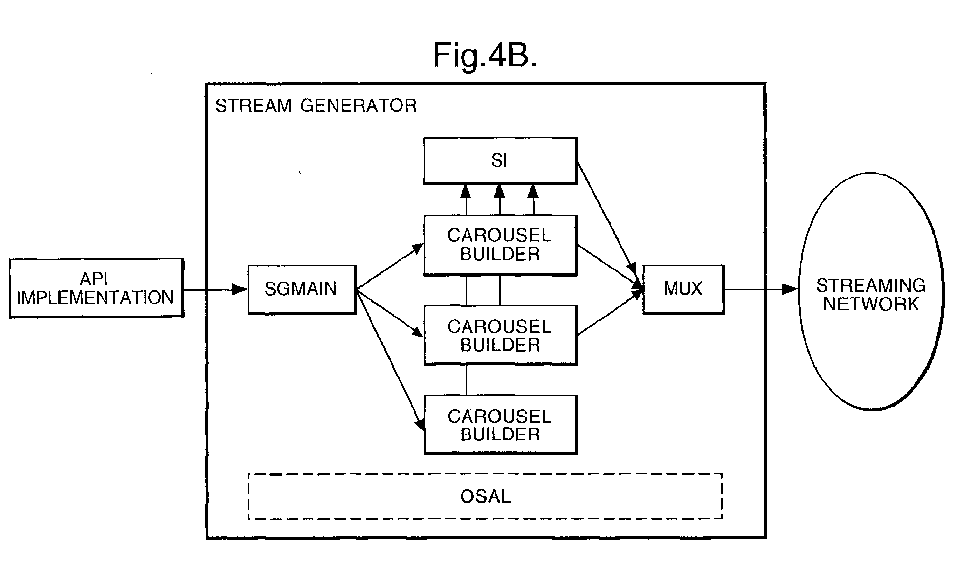

Figure 4B illustrates a Stream Generator. The Stream Generator is responsible for dynamically building the transport bit stream starting from the conceptual description of the Data/Object Carousel. The architecture of the Stream Generator consists of a number of concurrently running threads. There are the following threads:
1. SGMain: this thread is responsible for communicating with the API server. It receives commands from the API server to start or stop an object carousel, to drop a carousel from a running stream, or to update some content inside a running stream. In addition, the SGMain thread is also responsible for managing the other threads. This implies the starting/stopping of these threads and to control their synchronization.
2. Carousel builder (CB): this thread is responsible for constructing the (binary) DSMCC sections hat make up the object carousel. The CB thread receives the carousel description from the SGMain thread. Once the DSMCC sections are constructed they are delivered to the Mux thread as payloads (see below). The CB thread also communicates with the SI thread to insert the proper service information in the tables managed by the SI thread.
3. SI: this thread is responsible for generating and updating service information (SI) tables. It dynamically constructs the MPEG2 sections that make up these SI tables and delivers the sections as payloads to the Mux thread. Currently, 2 tables are managed by the SI thread; PAT and PMT. The CB thread receives requests from the CB thread to reserve programme numbers in the PMT, to reserve PIDs for the carousels and to add or delete descriptions for the PMT that are needed to identify the carousels.
4. Mux: this thread receives payloads from the CB and SI thread and multiplexes the payload into MPEG2 transport stream packets. In addition, the Mux thread communicates with the physical device driver to pump out the transport stream packets over the physical interface ethernet, ASI, ATM.

Each component in the Stream Generator (SGMain, SI, Carousel Builder, Mux) is a separate thread running concurrently with the other threads. The SI, Carousel Builder work in "push" mode. They compute parts of the transport bit stream and push them forward to the Mux. The Mux thread works in "pull" mode. As soon as data is available from either the SI or Carousel Builders, it pulls off this data and starts multiplexing the payloads into the transport stream packets.

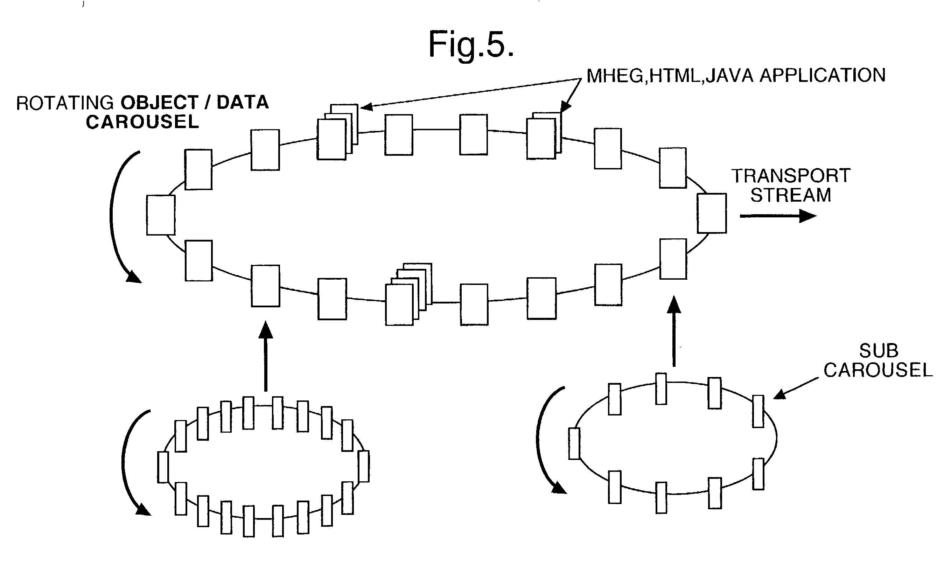

Each carousel builder 28 is capable of constructing a carousel of information, for instance as illustrated in Figure 5. The carousel builder constructs transport stream data appropriately for transmitting in rotation a series of DSMCC files. For instance, each page as illustrated in Figure 5 might comprise MHEG or HTML files or Java applications. As a result, the stream produced by the Stream Generator includes each of those pages in turn.

It is also possible for the carousel builder to construct sub-carousels, such that on each rotation of the main carousel of pages, a particular page itself rotates through a series of sub-pages.

Since each output stream may contain a number of different carousels, a number of different carousel builders 28 may also be provided. The multiplexer/packetiser 30 arranges the data from the various carousel builders 28 into the output stream.

As illustrated in Figures 4 A and B, the Stream Generator 26 also uses the Operating System Abstraction Layer. Furthermore, it uses a Driver Abstraction Layer. In this way, as with the operating system, the output driver may be changed without changing the entire construction of the Information Server. Instead, it is merely necessary to change the driver implementation.

The driver 32 delivers transport stream data to a DVB encoder board.

Each of the carousel builders 28 may operate with its own data, the multiplexer handling scheduling between the various carousels of the transport stream.

The carousel builders effectively have their own memories. Indeed, having constructed the pages of the carousel from data in the storage 24, the transport stream data of those pages may be stored by the carousel builders. In this way, when a page of a carousel is changed under the instruction of the API server from the host computer, it may not be necessary to recalculate the data of the entire carousel, but only of the changed page. Even where the data of one page is dependent on other pages, it is also proposed to incorporate a dependency structure, such that, once again, it is only necessary to recalculate data for pages which require change and not all of the pages.

Each carousel builder 28 reads the content and content descriptions, assembles the DSMCC object carousels and prepares appropriate DSI, DII or DDB sections.

The SI tables manager 34 is for managing PAT/PMT sections, programme numbers and PIDs. The multiplexer/packetiser 30 is for splitting the sections into packets and assembling the packets into slots for the driver 32.

As mentioned above, the Information Server preferably includes an operating system abstraction layer OSAL. This may be an object orientated C++ based class library OSAL is proposed that provides an API that abstracts some of the essential operating system services offered by various operating systems such as Windows 95, Windows NT, UNIX, LINUX etc. It is proposed that the OSAL provides abstractions for threads, semaphores, files, directories, processors, file system independent path names and inter-process message queues.

The OSAL thread abstraction supports the creation and destruction of independent units of execution within the address space of a single process. Thread scheduling follows a simple priority scheme based on a discrete number of priority classes.

The OSAL semaphore abstraction supports intra-process, bounded and unbounded counting semaphores and the associated Wait/Signal operations that can be used to synchronise the execution state of different threads.

The OSAL file/directory abstractions provide a simple virtual file system with a hierarchical directory structure and read/write/execute file/directory permissions. The file system independent path names provide an operating system independent naming scheme that can be mapped onto different physical file system organisations. Operations are provided to create/delete files, read/write byte sequences from/to files, position on a particular byte number and retrieve a file's size. Operations over a directory include creation/deletion and iteration over the constituent files/directories.

The OSAL process abstraction may support the concept of virtual address spaces and code/data segments that need to be part of the address space. Operations may be provided to start/stop a process and to enquire about its status (running, terminated).

The OSAL mqueue abstraction may provide a means to perform inter/process communication based on byte oriented, first-in first-out message queues. Operations may be provided to put into or retrieve variable length byte strings from the queue and to check the total number of messages/bytes available on each queue.

Each of the OSAL abstractions may be supported by a different, strongly typed C++ handle class. The handle classes provide an object-oriented view on the operating system abstractions. Due to strong typing applications written on top of the OSAL, API benefit from stringent compile time type checking. Instances of handle classes represent operating system dependent entities and the operating system services are represented as methods on the handle class. The implementation of the handle classes is light-weight, efficient and portable across all platforms that support the ANSI C++ standard because it uses a low-level API whose implementation is operating system (Windows 95, Windows NT, Unix) specific. In most cases, the low-level API maps directly onto the services supported by the underlying operating system so that the overhead imposed by OSAL is minimal.

The OSAL class library and API may be used to build a cross-platform implementation of a DVB-compliant data broadcast server that supports the delivery of HTML, Java, MHEG applications and other data via DSMCC Object and Data carousels. The threading abstraction may be used to support (a) multiple threads generating the DSMCC object Carousel bit stream from content data, (b) a thread dedicated to generating DVB Service Information and (c) a thread multiplexing DSMCC sections and table data into transport stream packets. The semaphore abstraction is used to implement the synchronisation between these threads. The file and directory abstractions are used to implement access to persistent content on the server's file system. The process abstraction is used to implement one process dedicated to network communication and another process handling the generation of the server's outgoing transport streams. The mqueue abstraction is used to implement the communication between the networking stack and the generation of the bit stream. Using the OSAL class library and API the data broadcast server application code runs unmodified on each of the operating systems that OSAL is currently supported on.

As explained above, each Stream Generator 26 may have a number of carousel builders 28. It may often be desired that the pages of one carousel be transmitted more often than the pages of another carousel. In order to do this, the multiplexer/packetiser 30 may introduce into the transport stream packets from one carousel more often than another. By way of example, where there are only two carousels and one has three times the weighting of the other, when filling transport stream packets, the multiplexer/packetiser assigns a 75% weighting to one carousel and will fill three packets with data from that carousel for every one packet filled with data from the other carousel.

Unfortunately, this system is computationally expensive when changes are made to the nature of the data transmitted on the transport stream. For instance, for the example given above, if a third carousel is added with a similar importance as the lower importance carousel already in use, then the system has to recalculate that the three carousels should be given respectively 60%, 20% and 20% of the transmission time. In other words, whenever the importance of the carousel is changed or carousels are added or deleted, the proportioning carried out by the multiplexer/packetiser 30 has to be recalculated.

In the information server, a new algorithm is proposed for the scheduling of the packets.

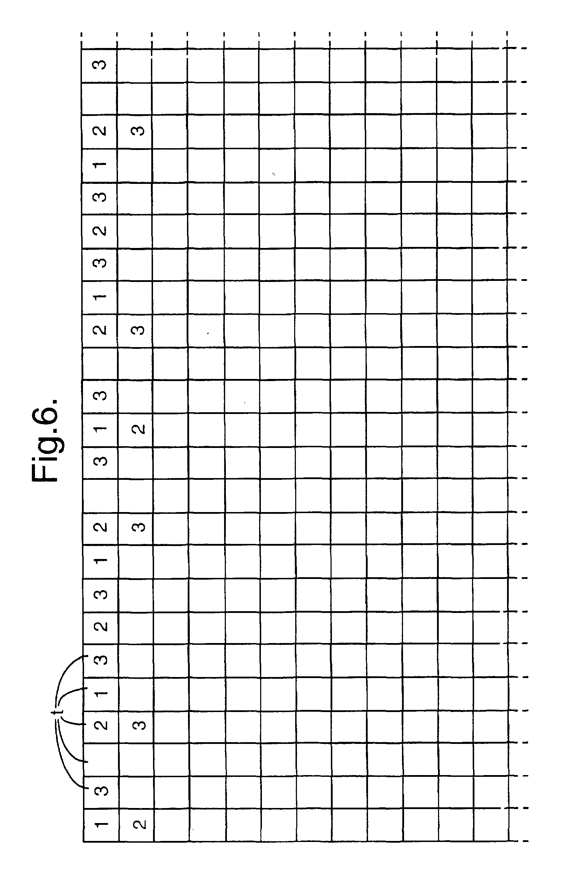

Referring to Figure 6, there is illustrated a data arrray for proportioning the importance of various data sources.

It is arranged as a series of notional time slots t. Each time slot t of the array allows the registration of one or more data sources, for instance carousels, raw data from storage 24 etc.. By allocating each data source with a relative priority based on a notional frequency, the various data sources may be easily prioritised.

In the illustrated example, data source 1 is allocated as priority "4" and, hence, occurs every four notional time slots. Similarly, data source 2 is given a priority of "3" and data source 3 is given a priority of "2". The multiplexer/packetiser 30 then forms MPEG packets by following in sequence the data sources designated along the array, ignoring any empty notional time slots. For example, following the data sources illustrated in Figure 6, it fills a packet with data from data source 1, then a packet with data from data source 2, then a packet with data from data source 3, then a packet with data from data source 2, then a packet with data from date source 3, then a packet with data from data source 1 etc. In this way, data from data source 1 will be transmitted three times for every four times transmitted from data source 2 and for every six times transmitted from data source 3.

By using the array as described above, no recalculation is required when data sources are added or deleted or when the priority of a data source is changed. For instance, if data source 3 is deleted, the relative priority between data sources 1 and 2 is maintained. Similarly, if a fourth data source is transmitted with a very high priority, for instance allocation "1", then even though data sources 1, 2 and 3 are all transmitted then with half the frequency than before, their relative priorities and frequencies remain the same. Thus, the system of prioritising data operations is made computationally more efficient.

By using this system in the Stream Generators 26 of the described Information Server, it is then easy to allocate band width to various data sources, such as the various carousel builders 28. However, it is equally applicable to allocating processing time in a CPU. In particular, the various tasks requiring execution can be allocated with priorities in the same way as band width is allocated.

It is proposed that the ability to obtain resources, for instance processing or band width, need not be based only on a proportional share of the resources, but also on a latency of initial access. In other words, some processes may require action more immediately than others. For instance, the low latency allocation of CPU processing time is important in ensuring smooth operation of multi-media applications. Where two processes, for instance word processing and video display, are allocated a preset proportion of processing time, it may still be that it is more important for the video display to be given more immediate access to the processing.

In order to account for this need, an additional parameter may be assigned to each resource consumer or data operation, whether this is data processing or transmission of data. This parameter is intended to define the latency of resource access.

Thus, each resource or data operation is given a latency value, such that a number of resource consumers may be compared in order to determine which should be conducted first or, similarly, a number of resource consumers may be compared to see which should be transmitted first. In the case of the Information Server discussed above, where there is a very important piece of information which should be transmitted and received as soon as possible, the appropriate data source can be given a very high latency value, such that this data will be inserted by the multiplexer/packetiser 30 into the data stream as soon as possible.

In the carousel builders 28 described above, the carousel builders each construct a plurality of DVB sections for supply to the multiplexer/packetiser 30. These sections include data representing the carousel of that particular carousel builder. It is desired that the Information Server or the carousel builder itself be able to change or replace one or more of the pages within its carousel. However, as explained above, once a carousel builder 28 has constructed an appropriate carousel from the data in storage 24, that data is not recalculated, but is merely stored for cyclical transmission. In order to change a page or file in the carousel, it is possible to recalculate all of the data for that carousel. However, this can result in an undesirable delay before the new carousel is transmitted.

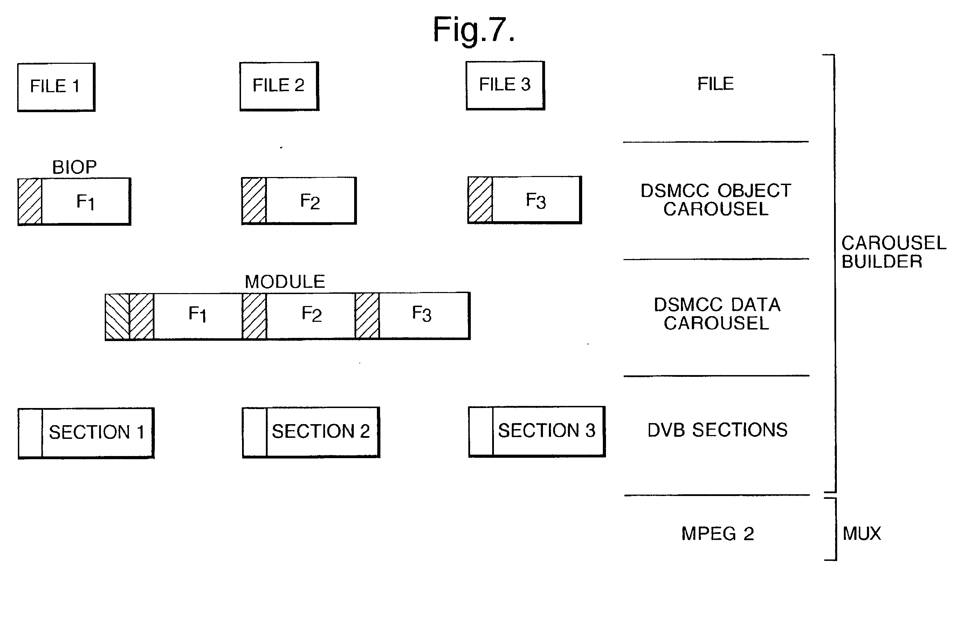

Figure 7 illustrates the process of data conversion conducted by the carousel builder. The data files have headers added to them to form BIOPs as part of a DSMCC object carousel. These are then grouped together to form Modules for the DSMCC data carousel, which are then in turn divided into DVB sections for passing on to the multiplexer.

As will be appreciated, if File 1 is changed, then the BIOP File 1 will also be changed, together with the resulting module and sections. However, the BIOPs for Files 2 and 3 will remain unchanged. Therefore, after a change to File 1, it is not necessary for the carousel builder to recalculate BIOPs for Files 2 and 3.

In order to enable the carousel builder 28 to avoid the unnecessary calculation, a dependency mechanism is proposed. By using this mechanism, it is possible to rapidly update the bit stream representation of a DSMCC object carousel by only using updates to its constituents, i.e. files, directories etc..

The dependency structure is arranged in the carousel builder by a series of nodes and pointers. In particular, the dependency network consists of two types of entities, namely (a) dependency nodes that store pointers, called content references, to particular sub-parts of the bit stream representation of the DSMCC object carousel and (b) dependency links that indicate how one set of content references is used to calculate another set of content references. The dependency nodes themselves come in two types, namely (1) primary nodes that contain the content references to the constituents (e.g. the DSMCC file and directory objects) of a DSMCC object carousel and (2) computed nodes that contain transformations to the content references of other nodes. A transformation is applied to a set of content references and results in a set of new content references pointing to new parts of the DSMCC object carousel bit stream.

As a carousel builder constructs the appropriate data, dependency links are stored so as to indicate how one piece of the DSMCC object carousel bit stream (e.g. a module) leads to another piece of the bit stream (e.g. the compressed equivalent of the same module). The dependency links are established when transformations are executed by the computed nodes of the dependency network. In particular, when a transformation of a dependency node uses the content references associated with another node (whether a primary note or a computed node), a dependency is established between the used node and the one that calculates the transformation. A dependency link is stored with respect to the used node indicating the node for which it was used.

The dependency links allow the dependency mechanism to determine quickly the set of transformations that need to be reapplied in order to recalculate a new bit stream when constituents of the object carousel change, i.e. when data of the primary nodes change.

When an update is carried out, some of the DSMCC file and directory objects will be changed. As a result, the primary nodes relating to those changes will also be changed. For those primary nodes where a change has occurred, the dependency links associated with those primary nodes are followed to mark any resulting computed node. Where a computed node is reached, the dependency link of that computed node is used to move forward again to any further computed note. All of the computed nodes which are reached in this way are cleared, together with any forward dependency links. As a result, the dependency network has certain linked computed nodes empty. The carousel builder therefore repeats the original calculation process for those computed nodes which are now empty. As a result, when the computed nodes reapply their transformations to recompute a new set of content references, dependency links are once again established from the nodes to which they have referred.

Where primary nodes have not been changed or computed nodes not been deleted, then a subsequent computed node can merely refer back to the unchanged primary or computed nodes. Thus, if a computed node refers only to unchanged primary computed nodes, it can be used directly without reapplying its transformation. As long as the content references on which the result depends do not change, the result can be reused in an updated bit stream directly without having to recompute it. Since the parts of a carousel which are not affected by an update are already stored in the dependency network, the dependency network allows for rapidly updating the content of a DSMCC object carousel.

In this way, the dependency mechanism may be used to build up bit stream representations of DSMCC sections that make up object carousels. The bit stream representation consists of a list of content references pointing to the different sections. The content references are passed to the multiplexer that packetises the DSMCC sections into an MPEG transport stream. The mechanism may be used to recompute the modified DSMCC sections when constituent parts of the DSMCC object carousel (e.g. files and directories) change. It is also possible to apply the technique to DSMCC data carousels.

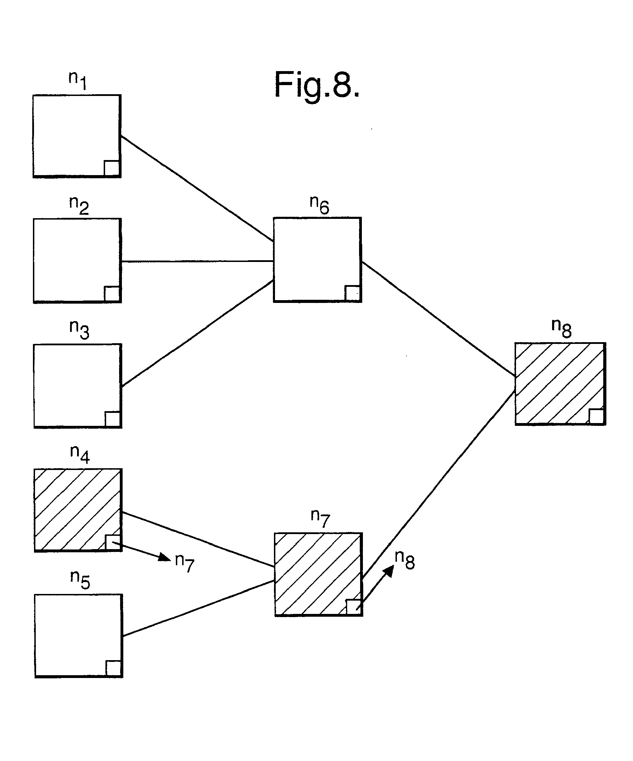

This is illustrated in Figure 8. In particular, by changing the primary node n4 and referring to the dependency link, it is evident that the content of computed node n7 must also be changed. By referring to the dependency link for computed node n7, it is then also clear that the content for computed node n8 must also be changed. With the content of computed nodes n7 and n8 deleted and with primary node n4 containing the new content references, computed node n7 is recalculated using the content references of primary nodes n4 and n5. The content references for computed node n8 may then be recalculated from content references of computed nodes n6 and n7. It will be seen that, in this process, it is not necessary to recompute the content references for computed node n6.

For each Stream Generator 26 of the Information Server, it is desirable to provide some further flexibility in updating the DSMCC file objects to be transmitted by the transport stream.

As discussed above this Stream Generator 26 includes one or more carousel builders 28 and a multiplexer/packetiser 30 for constructing the resulting MPEG transport stream. Furthermore, a dependency network is built into the process of computing the required DSMCC sections of a DSMCC object carousel, called payloads, that constitute the bit stream at DSMCC level.

It is desired to provide a "hot insertion" of DSMCC file objects. This is an out-of-band insertion of a DSMCC file object as soon as possible in the broadcast bit stream.

As explained above, once the required DSMCC sections of a DSMCC object carousel have been calculated for a carousel, they are merely stored and retransmitted cyclicly. It would not, therefore, be desirable to merely hot insert a DSMCC file object into the objects of the carousel, since the DSMCC level bit stream would then have to be recalculated. On the other hand, merely inserting DSMCC sections for a hot insert into the already established bit stream is likely to corrupt transmission of the DSMCC object carousel.

The multiplexer repeatedly loops through the list of computed payloads and dynamically chops up the payloads into MPEG2 transport stream packets for transmission. In order to allow for "hot insertion" of DSMCC file objects, "insertion points" are defined inside the payload list of the complete set of DSMCC sections for the object carousel. These "insertion points" are markers where the multiplexer can safely insert additional payloads for an out-of-band DSMCC file object.

Thus, the payload for the out-of-band update is computed and passed to the multiplexer. The multiplexer then waits until the next available marked "insertion point" and then inserts the out-of-band payload. The effect of this is to delay transmission of the rest of the carousel data but not to interfere with its content.

As mentioned above, it is also desirable to provide a cyclic update of a single DSMCC file object. In other words, for every round of the carousel broadcast, a different version of a particular DSMCC file may be transmitted.

With regard to the dependency network described above, the cyclic update is achieved by having a separate node in the dependency network that is used to compute the payloads for each version of the DSMCC object. The complete list of payloads is presented to the multiplexer, but this list is organised internally in such a way that it delivers the next payload value whenever the multiplexer requests it in the next cycle of the object carousel. This mechanism is extremely efficient, since, rather than calculating an updated version of the DSMCC object for each round of the carousel, a pointer may merely indicate the appropriate payload.

It is desirable that the selection of DSMCC file objects with regard to broadcast order, broadcast frequency and hot update is implemented by the user. In order to do this, it is proposed that data should be entered in the manner of the table given below.

**Table 1**

| **Reference Name** | **Attribute** | **Full Name** |
|---|---|---|
| page 1 | Normal | /sports/intro |
| page 2 | Cyclic | /news/item 1 |
| | | /news/item 2 |
| | | /news/item 3 |
| | | /news/item 4 |
| page 3 | Immediate | /gambling/horses |
| page 2 | Cyclic | /news/item 5 |
| | | /news/item 6 |

As may be seen, the table consists of three columns. The first column lists the reference name of a DSMCC file object as it will be handled by the receiver of the broadcast. The complete list of reference names constitutes the virtual name space that the receiver handles. The second column specifies the attribute for the item referenced by the reference name. It is proposed to provide three attributes, namely normal, cyclic and immediate. These will be described below. The third column specifies a list of full names, in other words a physical file name.

The attribute "normal" means that the referenced page will always output the listed file. On the other hand, for the attribute "cyclic", the table may contain more than one full name, such that in each cycle of the carousel, the next full name listed for that page will be included. The attribute "immediate" normally has the same effect as "normal" in that a single file will be transmitted for that page. However, where a referenced page has the attribute "immediate" as soon as an update is received for that page, the page will be inserted as a "hot insert", but will then not again appear until its normal position in the carousel.

For the example given above, the carousel configuration table defines a logical carousel consisting of 3 pages named: page 1, page 2, page 3. The broadcast order is defined by the first column, i.e. -page 1-page 2-page 3-page 2 and then back to page 1. However, for the cyclic pages in each cycle of the carousel the next item from the list of full names (third column will be taken). Consequently, from a content point of view the carousel order will be: /sports/intro-/news/item 1-/gambling/horses-/news/item 5-/sports/intro-/news/item 2-/gambling/horses-/news/item 6-/sports/intro-/news/item 3-/gambling/horses-/news/item 5-/sports/intro-/news/item 4-/gambling/horses-/news/item 6...

Following the entry of the data for the carousel configuration table, an appropriate carousel builder computes the required DSMCC section according to the dependency network discussed above. In particular, the pages defined by the reference names are set up as primary nodes. Where a page is defined as being cyclic, then the carousel builder sets up equivalent duplicate pages corresponding to each object of the cycle. The carousel builder then computes appropriate modules for the pages. Preferably, in computing the modules, equivalent cyclic pages are assigned to separate modules, such that at each cycle recalculation is kept to a minimum. Similarly, pages which have the attribute "immediate" are assigned to separate modules so as to facilitate their insertion when necessary.

## Claims

1. A system for prioritising data operations, such as processing or transmission, the system comprising:
means for constructing a cyclic array of a predetermined number of notional time slots (t);
input means for assigning a priority to each data operation in terms of a frequency value, the frequency value being defined as the frequency of occurrence of the respective data operation relative to the notional time slots;
control means for registering each data operation in the array at a series of consecutive notional time slots (t) with a spacing determined according to the frequency value, for consecutively referring to each of the notional time slots (t) of the array in which one or more data operations are registered and for initiating a data operation whenever the data operation is registered and hence selected according to advancement in notional time.

2. A system according to claim 1 further comprising:
a Stream Generator (26) for assembling transport stream packets from a selection of data sources, a frequency value being assigned to each of the data sources and the Stream Generator (26) selecting a data source from which to take data for a transport stream payload according to the control.

3. A system according to claim 1 or 2 further comprising:
an input for assigning each data operation with a latency value indicative of relative urgency, the control deciding which data operation to conduct next on the basis of at least the latency values.

4. An information server (18) for providing information in an output transport stream, such as DVB/MPEG2, including a system according to any preceding claim.

5. An information server according to claim 4 wherein the output transport stream is DVB compatible.

6. A method of prioritising data operations such as processing or transmission, the method comprising the steps of:
constructing a cyclic array of a predetermined number of notional time slots (t);
assigning a priority to each data operation in terms of a frequency value, the frequency value being defined as the frequency of occurrence of the respective data operation relative to the notional time slots (t);
registering each data operation in the array at a series of consecutive notional time slots (t) with a spacing determined according to the frequency value; and
consecutively referring to each of the notional time slots (t) of the array in which one or more data operations are registered and carrying out a data operation whenever the data operation is registered and hence selected for the current notional time.

7. A method according to claim 6 further comprising:
assigning each data operation with a latency value indicative of relative urgency; and
deciding which data operation to conduct next on the basis of at least the latency values.

## Patentansprüche

1. System zum Prioritätensetzen von Datenoperationen wie beispielsweise Verarbeiten oder Übertragen, wobei das System aufweist:
eine Einrichtung zum Aufbauen eines zyklischen Arrays aus einer vorbestimmten Anzahl begrifflicher Zeitschlitze,
eine Eingabeeinrichtung, die jeder Datenoperation eine Priorität in Form eines Häufigkeitswerts zuordnet, wobei der Häufigkeitswert als die Häufigkeit des Auftretens der jeweiligen Datenoperation relativ zum begrifflichen Zeitschlitz definiert ist,
eine Steuerungseinrichtung zum Registrieren jeder Datenoperation im Array bei einer Reihe aus aufeinanderfolgenden begrifflichen Zeitschlitzen (t) mit einem entsprechend dem Häufigkeitswert bestimmten Abstand zum aufeinanderfolgenden sich Beziehen auf jeden der begrifflichen Zeitschlitze (t) des Arrays, in welchem ein oder mehrere Datenoperationen registriert sind, und zum Initiieren einer Datenoperation, immer wenn die Datenoperation registriert ist und folglich entsprechend einem Vorwärtsgehen in der begrifflichen Zeit ausgewählt wird.

2. System nach Anspruch 1, außerdem ausweisend:
einen Stromgenerator (26) zur Zusammensetzung von Transportstrompaketen aus einer Auswahl von Datenquellen, wobei jeder der Datenquellen ein Häufigkeitswert zugeordnet ist und der Stromgenerator (26) eine Datenquelle auswählt, der Daten für eine Transportstrom-Nutzinformation entsprechend der Steuerung zu entnehmen sind.

3. System nach Anspruch 1 oder 2, außerdem aufweisend:
einen Eingang zum Verbinden jeder Datenoperation mit einem eine relative Dringlichkeit anzeigenden Latenzwert, wobei die Steuerung auf der Basis wenigstens der Latenzwerte entscheidet, welche Datenoperation als nächste einzuleiten ist.

4. Informationsserver (18) zur Bereitstellung von Information in einem Ausgangstransportstrom wie beispielsweise DVB/MPEG2, aufweisend ein System nach einem der vorhergehenden Ansprüche.

5. Informationsserver nach Anspruch 4, wobei der Ausgangstransportstrom DVB-kompatibel ist.

6. Verfahren zum Prioritätensetzen von Datenoperationen wie beispielsweise Verarbeiten oder Übertragen, wobei das Verfahren die Schritte aufweist:
Aufbauen eines zyklischen Arrays aus einer vorbestimmten Anzahl von begrifflichen Zeitschlitzen (t),
Zuordnen jeder Datenoperation eine Priorität in Form eines Häufigkeitswerts, wobei der Häufigkeitswert als die Häufigkeit eines Auftretens der jeweiligen Datenoperation relativ zu den begrifflichen Zeitschlitzen (t) definiert ist,
Registrieren jeder Datenoperation im Array bei einer Reihe von aufeinanderfolgenden begrifflichen Zeitschlitzen (t) mit einem entsprechend dem Häufigkeitswert bestimmten Abstand, und
aufeinanderfolgendes sich Beziehen auf jeden der begrifflichen Zeitschlitzen (t) des Arrays, in welchem eine oder mehrere Datenoperationen registriert sind, und Ausführen einer Datenoperation, immer wenn die Datenoperation registriert ist und folglich für die laufende begriffliche Zeit ausgewählt ist.

7. Verfahren nach Anspruch 6, außerdem aufweisend:
Verbinden jeder Datenoperation mit einem eine relative Dringlichkeit anzeigenden Latenzwert und
Entscheiden auf der Basis wenigstens der Latenzwerte, welche Datenoperation als nächste einzuleiten ist.

## Revendications

1. Système de gestion de priorité d'opérations de données telles qu'un traitement ou qu'une transmission, le système comprenant :
un moyen pour construire un réseau cyclique d'un nombre prédéterminé de fenêtres temporelles notionnelles (t) ;
un moyen d'entrée pour assigner une priorité à chaque opération de données en termes d'une valeur de fréquence, la valeur de fréquence étant définie en tant que la fréquence de survenue de l'opération de données respective par rapport aux fenêtres temporelles notionnelles ;
un moyen de commande pour enregistrer chaque opération de données dans le réseau au niveau d'une série de fenêtres temporelles notionnelles constitutives (t) moyennant un espacement qui est déterminé conformément à la valeur de fréquence, pour se référer de façon consécutive à chacune des fenêtres temporelles notionnelles (t) du réseau où une ou plusieurs opérations de données sont enregistrées et pour initier une opération de données chaque fois que l'opération de données est enregistrée et est par conséquent sélectionnée conformément à l'avancement du temps notionnel.

2. Système selon la revendication 1, comprenant en outre :
un générateur de train (26) pour assembler des paquets de train de transport en provenance d'une sélection de sources de données, une valeur de fréquence étant assignée à chacune des sources de données et le générateur de train (26) sélectionnant une source de données à partir de laquelle il convient de prendre des données pour une charge utile de train de transport conformément à la commande.

3. Système selon la revendication 1 ou 2, comprenant en outre :
une entrée pour assigner à chaque opération de données une valeur de latence qui est indicative d'une urgence relative, la commande décidant quelle opération de données mettre en oeuvre ensuite sur la base d'au moins les valeurs de latence.

4. Serveur d'information (18) pour appliquer une information dans un train de transport de sortie, tel que DVB/MPEG2, incluant un système selon l'une quelconque des revendications précédentes.

5. Serveur d'information selon la revendication 4, dans lequel le train de transport de sortie est compatible DVB.

6. Procédé de gestion de priorité d'opérations de données telles qu'un traitement ou qu'une transmission, le procédé comprenant les étapes de :
construction d'un réseau cyclique d'un nombre prédéterminé de fenêtres temporelles notionnelles (t) ;
assignation d'une priorité à chaque opération de données en termes d'une valeur de fréquence, la valeur de fréquence étant définie en tant que fréquence de survenue de l'opération de données respective en relation avec les fenêtres temporelles notionnelles (t) ;
enregistrement de chaque opération de données dans le réseau au niveau d'une série de fenêtres temporelles notionnelles consécutives (t) moyennant un espacement qui est déterminé conformément à la valeur de fréquence ;
référence de façon consécutive à chacune des fenêtres temporelles notionnelles (t) du réseau où une ou plusieurs opérations de données sont enregistrées et mise en oeuvre d'une opération de données chaque fois que l'opération de données est enregistrée et est par conséquent sélectionnée pour le temps notionnel courant.

7. Procédé selon la revendication 6, comprenant en outre :
l'assignation à chaque opération de données d'une valeur de latence qui est indicative d'une urgence relative ; et
la décision de quelle opération de données il convient de mettre en oeuvre ensuite sur la base d'au moins les valeurs de latence.
